# EUROPÄISCHE PATENTANMELDUNG

(11) **EP 2 298 078 A2**
(43) Veröffentlichungstag der Anmeldung: **23.03.2011**
(21) Anmeldenummer: 10007843.5
(22) Anmeldetag: 28.07.2010
(51) Int. Cl.: A21C 7/01

(54) **Wirkvorrichtung zum Wirken von Teiglingen**

(30) Priorität: 21.09.2009 DE 102009042101
(71) Anmelder: Fortuna Maschinenbau Holding AG, 96231 Bad Staffelstein (DE)
(72) Erfinder: Moritz, Alexander, 96250 Ebensfeld (DE)
(74) Vertreter: Schröer, Gernot H.

(57) **Zusammenfassung**

Die Erfindung betrifft eine Wirkvorrichtung zum Wirken von Teiglingen, umfassend
a) ein mittels eines Transportantriebes (22) bewegbares oder bewegtes Transportband (20) zum Fördern der Teiglinge in wenigstens einer Transportrichtung (T), wobei das Transportband eine Transportbandfläche (21), auf oder an der die zu wirkenden Teiglinge zu liegen kommen oder getragen werden, aufweist und
b) zumindest einen relativ zum Transportband in Ruhe bleibenden oder unbewegten Wirkkanal (30) mit einer Wirkkanalfläche (31), die sich in wenigstens einer Kanalrichtung (K) erstreckt, von der Transportbandfläche (21) beabstandet ist und wenigstens teilweise der Transportbandfläche zugewandt ist,
c) wobei die Transportrichtung (T) des Transportbandes und die Kanalrichtung (K) der Wirkkanalfläche zumindest abschnittsweise unter wenigstens einem Neigungswinkel schräg zueinander verlaufen, so dass ein auf dem Transportband geförderter Teigling zwischen der Transportbandfläche und der Wirkkanalfläche gewirkt wird.

## Beschreibung

Die vorliegende Erfindung betrifft eine Wirkvorrichtung zum Wirken von Teiglingen.

Teiglingswirkvorrichtungen sind im Stand der Technik in verschiedensten Ausgestaltungen bekannt, die an die Art und Konsistenz des Teiges und die gewünschte Form des Teiglings angepasst sind, beispielsweise Brötchenteiglinge oder Brotteiglinge oder Kuchenteiglinge.

Beispielsweise offenbart die DE-A-4100172 eine Wirkvorrichtung zum Rundwirken von Teiglingen. Diese Vorrichtung umfasst einen länglichen, im Wesentlichen V-förmigen Wirkkanal, der aus zwei die Wirkflächen bildenden Wirkförderbändern besteht. Die Wirkförderbänder sind im Bereich der Scheitellinie des Wirkkanals scharniergelenkig verbunden und mittels eines Stellorgans gegeneinander verschwenkbar. Ein Nachteil einer solchen Wirkvorrichtung besteht darin, dass ihr Aufbau nicht zuletzt aufgrund der Tatsache, dass beide Wirkförderbänder mit separaten Motoren einzeln angetrieben werden müssen, sehr komplex und entsprechend teuer ist. Ein solcher Wirkkanal ist auch nicht zum Wirken von sehr klebrigen Teigen, bei denen auch kein Mehl als Trennmittel eingesetzt werden darf, beispielsweise Panettoneteigen, geeignet, da die Teiglinge dann eine zu große Haftung an den beiden Wirkförderbändern entfalten würden und kein zufriedenstellendes Wirkergebnis erzielt würde.

Ausgehend von diesem Stand der Technik ist es eine Aufgabe der vorliegenden Erfindung, eine neue Teiglingswirkvorrichtung zu schaffen, die auch für Teiglinge aus sehr klebrigem Teig geeignet ist.

Eine Lösung dieser Aufgabe ergibt sich gemäß der Erfindung aus den Merkmalen des Patentanspruchs 1. Vorteilhafte Ausgestaltungen und Weiterbildungen gemäß der Erfindung ergeben sich aus den vom Patentanspruch 1 abhängigen Ansprüchen.

Die Wirkvorrichtung zum Wirken von Teiglingen (Teiglingswirkvorrichtung) gemäß Patentanspruch 1 umfasst ein mittels eines Transportantriebes bewegbares oder bewegtes Transportband zum Fördern der Teiglinge in wenigstens einer Transportrichtung und zumindest einen relativ zum Transportband in Ruhe bleibenden (oder: feststehenden) oder unbewegten Wirkkanal. Das Transportband weist eine Transportbandfläche auf, auf oder an der die zu wirkenden Teiglinge zu liegen kommen oder getragen werden. Der zumindest eine Wirkkanal weist eine Wirkkanalfläche auf, die sich in wenigstens einer Kanalrichtung erstreckt, die von der Transportbandfläche beabstandet ist und die wenigstens teilweise der Transportbandfläche zugewandt ist. Die Transportrichtung des Transportbandes und die Kanalrichtung der Wirkkanalfläche verlaufen zumindest abschnittsweise schräg unter wenigstens einem Neigungswinkel zueinander (oder: sind unter wenigstens einem Neigungswinkel zueinander gerichtet oder geneigt), so dass ein auf dem Transportband geförderter Teigling zwischen der bewegten Transportbandfläche und der feststehenden Wirkkanalfläche gewirkt wird.

Die Funktion dieser Wirkvorrichtung kann man sich wie folgt vorstellen: Der Teigling wird auf dem Transportband in Transportrichtung bewegt und aufgrund der Neigung des Wirkkanals gegen die Transportrichtung wird der Teigling mit einem Teil seiner Oberfläche gegen die feststehende zur Transportrichtung geneigte Wirkkanalfläche gedrückt und gleichzeitig in der Kanalrichtung entlang der Wirkkanalfläche gefördert. Dadurch wird der Teigling im Allgemeinen in Rotation versetzt oder rollt auf der Wirkkanalfläche und der Transportbandfläche ab und wird durch diese Rollbewegung zwischen der Transportbandfläche und der Wirkkanalfläche gewirkt, also geformt und im Allgemeinen geglättet und ggf. etwas verdichtet. Dabei nimmt der Teigling im Allgemeinen in den die Wirkkanalfläche berührenden Bereichen eine zur Querschnittsform der Wirkkanalfläche korrespondierende oder komplementäre Form an. Bei einer gleichbleibenden Wirkkanalflächenkontur im Querschnitt senkrecht zur Kanalrichtung werden die Teiglinge im Allgemeinen im Wesentlichen rotationssymmetrisch gewirkt oder rundgewirkt. Durch Änderung des Wirkkanalquerschnitts und/oder des Neigungswinkels entlang des Wirkkanals oder der Wirkstrecke können das Wirkergebnis und die Form des Teiglings auch variiert werden.

Aufgrund der Tatsache, dass lediglich ein einzelnes Transportband zum Fördern der Teiglinge angetrieben werden muss, der Wirkkanal jedoch nicht bewegt werden muss, ist der Aufbau der erfindungsgemäßen Wirkvorrichtung relativ einfach und preiswert. Ein besonderer Vorteil besteht darin, dass mehrere Wirkkanäle einem einzigen Transportband zugeordnet werden können und somit eine der Zahl der Wirkkanäle entsprechende Zahl von Teiglingen oder Teiglingsreihen nebeneinander und/oder gleichzeitig gewirkt werden können. Zudem ist die Querschnittsform der Wirkkanalfläche des zumindest einen Wirkkanals im Wesentlichen frei wählbar, so dass auch in Gestalt, Abmessungen und Teigkonsistenz unterschiedliche Teiglinge nur durch Austausch oder Anpassung der Wirkkanäle mit derselben Wirkvorrichtung gewirkt werden können.

In einer vorteilhaften Ausführungsform ist wenigstens ein Neigungswinkel zwischen der Transportrichtung und der Kanalrichtung auf wenigstens zwei verschiedene Werte, insbesondere innerhalb eines Wertebereiches, einstellbar oder variierbar, um eine Anpassung an verschiedene Teiglingstypen zu ermöglichen.

Bevorzugt ist zumindest ein Neigungswinkel zwischen der Transportrichtung und der Kanalrichtung in einer sich im Wesentlichen parallel zur Transportbandfläche erstreckenden Ebene eingestellt oder einstellbar ist. Auf diese Weise lässt sich insbesondere eine optimale Rotationsgeschwindigkeit der Teiglinge relativ zum Wirkkanal in Abhängigkeit von der Größe und der zu erzielenden Endform der Teiglinge einstellen.

Es kann aber auch alternativ oder zusätzlich ein Neigungswinkel zwischen dem zumindest einen Wirkkanal und der Transportrichtung in einer sich im Wesentlichen senkrecht zur Transportbandfläche erstreckenden Ebene eingestellt oder einstellbar sein. Auch auf diese Weise kann wahlweise Einfluss auf das Wirkergebnis genommen werden.

Der Neigungswinkel wird insbesondere aus einem Bereich zwischen 1° und 35°, vorzugsweise zwischen 2° und 25°, gewählt oder eingestellt.

Die Wirkkanalfläche wenigstens eines Wirkkanals ist bevorzugt in einem senkrecht zur Kanalrichtung gebildeten Querschnitt wenigstens teilweise konkav gekrümmt ausgebildet, insbesondere im Wesentlichen kreisförmig, insbesondere in Gestalt eines Viertelkreises, ausgebildet.

Im Allgemeinen ist der Querschnitt der Wirkkanalfläche über die Wirkanallänge oder in der Kanalrichtung konstant, was insbesondere die Ausbildung mittels einer einfachen Profilschiene ermöglicht.

In einer besonderen Ausführung kann aber sich der senkrecht zur Kanalrichtung gebildete Querschnitt der Wirkkanalfläche wenigstens eines Wirkkanals in der Kanalrichtung auch wenigstens teilweise verändern, insbesondere in Richtung der Transportrichtung verjüngen.

In einer Weiterbildung kann der der zumindest eine Wirkkanal auch um eine in Kanalrichtung verlaufende oder um eine zur Kanalrichtung parallele Schwenkachse verschwenkbar und in wenigstens zwei verschiedenen Schwenkstellungen fixierbar sein. Dies eröffnet eine weitere mögliche Einflussnahme auf das Endergebnis des Wirkprozesses, insbesondere auf die Endform der gewirkten Teiglinge.

In einer weiteren Ausführung kann auch der Abstand zwischen der Wirkkanalfläche und der Transportbandfläche variierbar oder auf wenigstens zwei verschiedene Werte einstellbar ist. Dies erlaubt beispielsweise eine Anpassung an unterschiedliche Abmessungen der Teiglinge oder sonstiger Einstellungen der Wirkvorrichtung.

In einer vorteilhaften Ausführungsform der Wirkvorrichtung sind oberhalb des Transportbandes zumindest zwei sich quer zur Transportrichtung erstreckende Führungsschienen vorgesehen, an denen der zumindest eine Wirkkanal über Halteelemente gehalten ist, wobei die Halteelemente entlang der Führungsschienen bewegbar und in verschiedenen Positionen fixierbar angeordnet sind und/oder die Halteelemente mit einer Höhenverstelleinrichtung zum Einstellen des Abstandes zwischen dem zumindest einen Wirkkanal und dem Transportband versehen sind und/oder die Halteelemente mit einem Schwenkmechanismus zum Verschwenken des zumindest einen Wirkkanals um seine axial zur Kanalrichtung oder eine sich parallel zur Kanalrichtung erstreckende Schwenkachse versehen sind.

Der zumindest eine Wirkkanal besteht vorzugsweise zumindest im Bereich seiner Wirkkanalfläche aus einem Kunststoff, insbesondere einem die Anhaftung der Teiglinge verringernden Kunststoff, besteht, beispielsweise einem Kunststoff auf Basis von PTFE oder POM.

Bevorzugt ist der zumindest eine Wirkkanal aus Metall, insbesondere Aluminium, hergestellt und im Bereich seiner Wirkkanalfläche mit dem Kunststoff beschichtet.

Aluminium verleiht dem Wirkkanal einen robusten und leichten Aufbau. Zudem hat sich der Einsatz von Aluminium in der Lebensmittel verarbeitenden Industrie aufgrund seiner speziellen Eigenschaften, wie beispielsweise seiner Korrosionsbeständigkeit, als sehr günstig erwiesen. Die Verwendung von Kunststoff für die Wirkfläche ist dahingehend von Vorteil, dass keine gesundheitlich bedenklichen Wechselwirkungen mit den direkt mit diesen in Kontakt kommenden Teiglingen bekannt sind. Zudem lässt sich Kunststoff einfach verarbeiten.

Die Wirkkanalfläche wenigstens eines Wirkkanals kann auch mit Noppen versehen sein oder eine Aufrauung aufweisen, was im Bezug auf die für den Wirkprozess erforderliche Haftung zwischen den Teiglingen und der Wirkfläche von Vorteil sein kann.

In einer bevorzugten Ausführungsform sind mehrere Wirkkanäle vorgesehen, wodurch die Leistung der Wirkvorrichtung entsprechend erhöht wird. Vorzugsweise sind die Wirkkanäle oder zumindest ihre jeweiligen Wirkflächen in Richtung parallel zur Transportbandfläche oder senkrecht zur Transportrichtung im Wesentlichen in gleichbleibenden Abständen zueinander angeordnet oder eingestellt.

Jeder Wirkkanal ist vorteilhaft lösbar an Halterungen oder Führungen der Wirkvorrichtung gehalten, so dass zum einen die Anzahl der Wirkkanäle problemlos variierbar ist und zum anderen einzelne Wirkkanäle durch solche mit anderer Querschnittsform ausgetauscht werden können.

Der zumindest eine Wirkkanal ist für eine einfache Herstellung bevorzugt profilschienenartig ausgebildet.

Im Allgemeinen ist der zumindest eine Wirkkanal oberhalb des Transportbandes angeordnet. Es ist aber auch eine seitliche oder schräge Anordnung denkbar, wenn ein Herunterfallen des Teiglings durch die Ausbildung der Wirkkanalfläche verhindert ist.

Besonders vorteilhaft ist es, besonders bei empfindlichen Teigen, wenn der Transport der Teiglinge in der Transportrichtung von einer Portioniereinrichtung zum Portionieren der Teiglinge zu dem wenigstens einen Wirkkanal im Wesentlichen horizontal und/oder ohne eine Fallbewegung erfolgt, außer ggf. einer anfänglichen Fallbewegung von der Portioniereinrichtung auf das Transportband oder ein dem Transportband vorgeschaltetes Übergabeband. Insbesondere wird dem Transportband eine Übergabeeinrichtung, insbesondere ein Übergabeband, vorgeschaltet, die die von einer Portioniereinrichtung kommenden Teiglinge im Wesentlichen horizontal und/oder ohne eine Fallbewegung an das Transportband übergibt.

Weitere Merkmale und Vorteile der vorliegenden Erfindung werden nachfolgend anhand der Beschreibung einer Ausführungsform einer erfindungsgemäßen Wirkvorrichtung unter Bezugnahme auf die beiliegende Zeichnung deutlich. Darin ist
- FIG 1: eine Seitenansicht einer Wirkvorrichtung gemäß einer Ausfüh- rungsform der vorliegenden Erfindung;
- FIG 2: eine Draufsicht der in FIG 1 dargestellten Wirkvorrichtung;
- FIG 3: eine Vorderansicht eines Halteelementes für einen Wirkkanal in einer ersten Schwenkstellung;
- FIG 4: eine Vorderansicht des in FIG 3 dargestellten Halteelementes in einer zweiten Schwenkstellung;
- FIG 5: eine Vorderansicht des in FIG 3 dargestellten Halteelementes in einer dritten Schwenkstellung;
- FIG 6: eine Bearbeitungsvorrichtung mit Portioniereinrichtung, Ü- bergabevorrichtung und Wirkvorrichtung in einer Draufsicht;
- FIG 7: die Vorrichtung gemäß FIG 6 in einer Seitenansicht;
- FIG 8: die Portioniereinrichtung und Übergabeeinrichtung

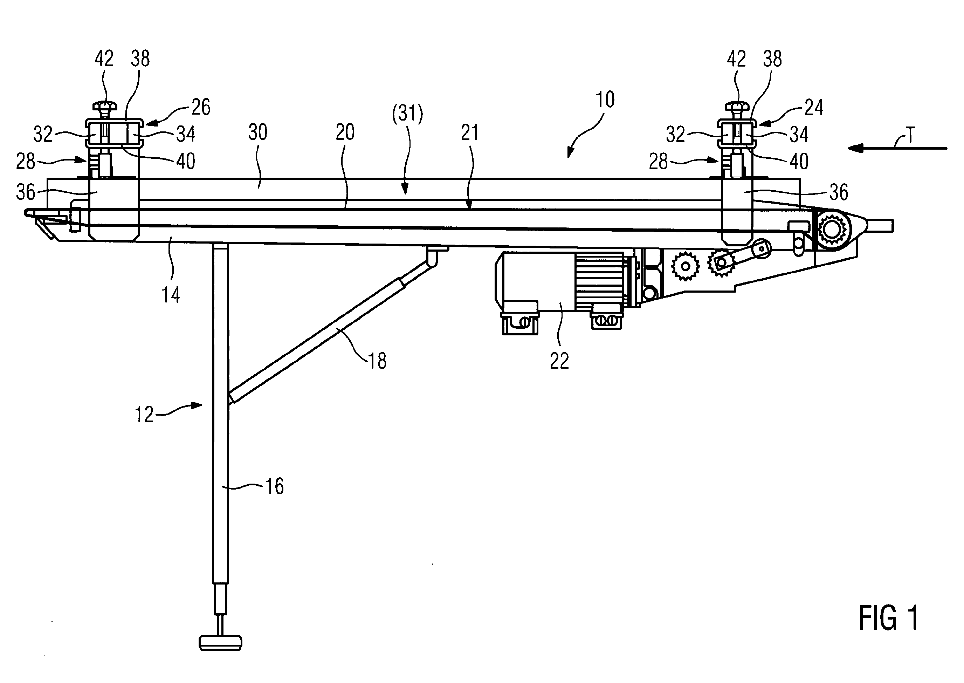

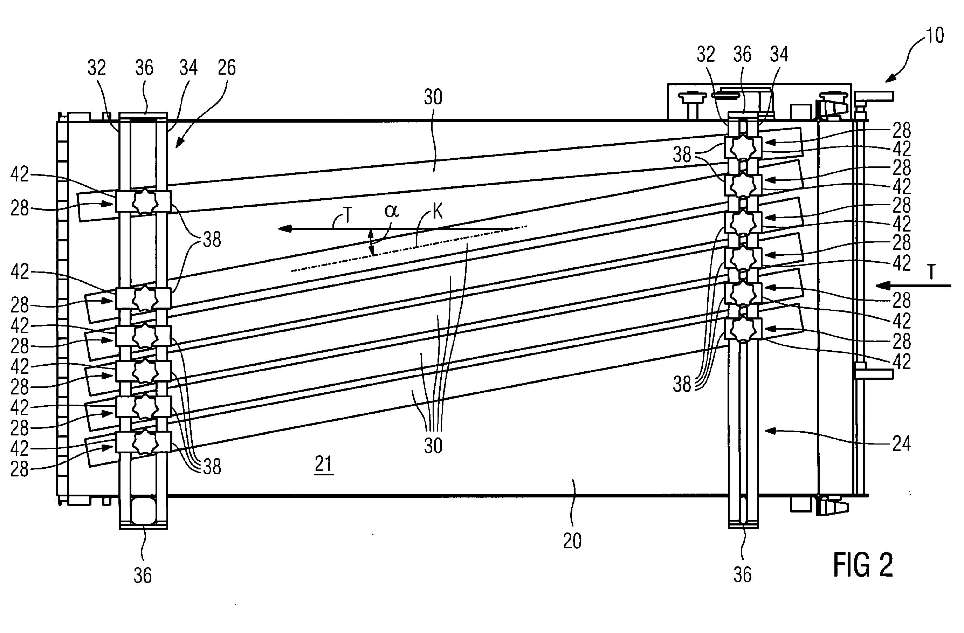

Die FIG 1 und 2 zeigen eine Wirkvorrichtung 10 gemäß einer Ausführungsform der vorliegenden Erfindung, die zum Wirken von Teiglingen dient.

Die Wirkvorrichtung 10 umfasst ein Gestell 12 mit einem horizontalen Gestellteil 14 und zwei als Standfüße dienenden vertikalen Gestellteilen 16, von denen in FIG 1 nur eines erkennbar ist. Die beiden vertikalen Gestellteile 16 sind zur Erhöhung der Stabilität mit dem horizontalen Gestellteil 14 jeweils über Stützteile 18 verbunden.

An dem horizontalen Gestellteil 14 ist ein sich horizontal erstreckendes (Endlos)-Transportband 20 gehalten, dass zum Fördern von nicht dargestellten Teiglingen auf einer oberen Transportbandfläche 21 in einer Transportrichtung T über einen unterhalb des horizontalen Gestellteils 14 befestigten Motor 22 (und ein nicht näher bezeichnetes Getriebe) antreibbar ist.

Seitlich an dem horizontalen Gestellteil 14 sind beabstandet voneinander zwei sich senkrecht zur Transportrichtung T und oberhalb des Transportbands 20 erstreckende Führungsschienen 24 und 26 vorgesehen, an denen über Halteelemente 28 mehrere, beispielsweise sechs, Wirkkanäle 30 gehalten sind.

Jede Führungsschiene 24, 26 umfasst zwei parallel zueinander angeordnete und sich senkrecht zur Transportrichtung T und in einem Abstand A oberhalb des Transportbandes 20 erstreckende Führungsstangen 32 und 34, die über sich senkrecht abwärts von diesen erstreckende Befestigungsabschnitte 36 an dem horizontalen Gestellteil 14 festgelegt sind.

Jedes Halteelement 28 umfasst eine obere Klemmbacke 38 und eine untere Klemmbacke 40, die die beiden Führungsstangen 32 und 34 entsprechend von oben und von unten umgreifen. Die beiden Klemmbacken 38 und 40 sind durch eine sich zwischen den Führungsstangen 32 und 34 erstreckende Stellschraube 42 miteinander verbunden und können durch Festdrehen bzw. Lösen der Stellschraube 42 aufeinander zu und voneinander weg bewegt werden. Entsprechend können die Halteelemente 28 im gelösten Zustand der Klemmbacken 38 und 40 entlang der Führungsstangen 32 und 34 der Führungsschiene 24 bzw. 26 verschoben werden.

Die im Ausführungsbeispiel linearen Wirkkanäle 30 sind mit ihrer Längsrichtung oder Kanalrichtung K unter einem Neigungswinkel α zur Transportrichtung T geneigt, so dass die Teiglinge an den Wirkflächen 31 der Wirkkanäle 30 entlang abrollen oder in Rotationsbewegung geraten und dadurch zwischen der Transportbandfläche 21 des Transportbandes 20 und der Wirkfläche 31 des jeweiligen Wirkkanals 30 gewirkt, insbesondere rundgewirkt, werden.

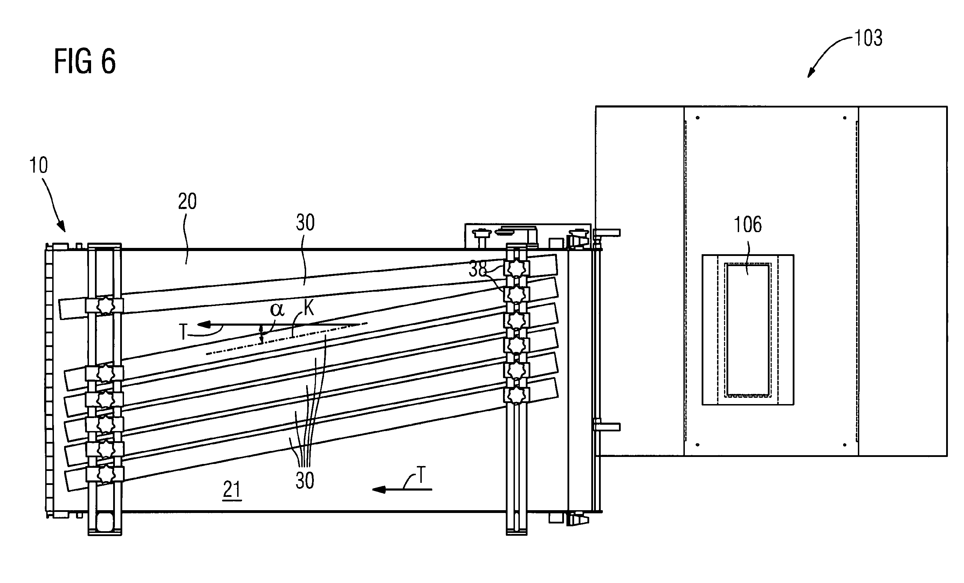

Der Neigungswinkel α ist durch die Positionen der Halteelemente 28 an den Führungsstangen 32 und 34 der Führungsschienen 24 und 26 einstellbar. Dies ist anhand des oberen Wirkkanals 30, der einen anderen Neigungswinkel aufweist als die unteren fünf Wirkkanäle 30, beispielhaft zu erkennen, bei dem das linke Haltelement relativ zum rechten Halteelement anders eingestellt ist als bei den anderen Wirkkanälen. Normalerweise sind die Neigungswinkel aller Wirkkanäle gleich eingestellt (siehe FIG 6).

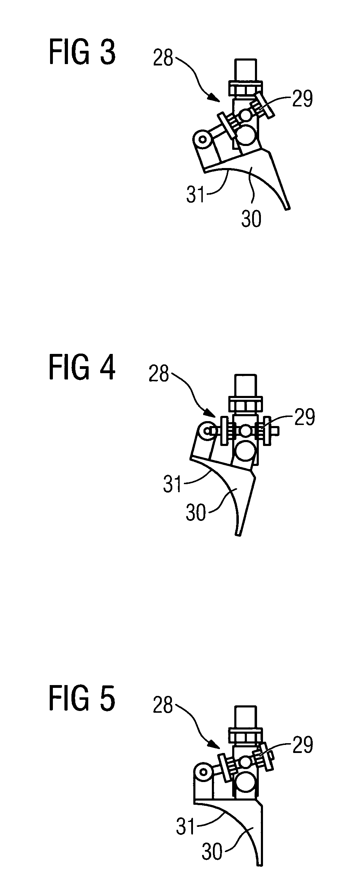

Zusätzlich kann eine Verschwenkung der Halteelemente 28 oder der Wirkkanäle 30 erfolgen, beispielsweise mit Hilfe einer Rändelmutter 29. Drei verschiedene solcher Schwenkstellungen sind in den FIG 3 bis 5 gezeigt. Man erkennt auch die im dargestellten Querschnitt senkrecht zur Kanalrichtung K sich ergebende Kontur oder Form der Wirkkanalfläche 31, mit der die Teiglinge gewirkt werden und die im Beispiel der FIG 3 bis 5 viertelkreisförmig ist, jedoch auch eine andere, vorzugsweise konkav gekrümmte, Gestalt aufweisen kann.

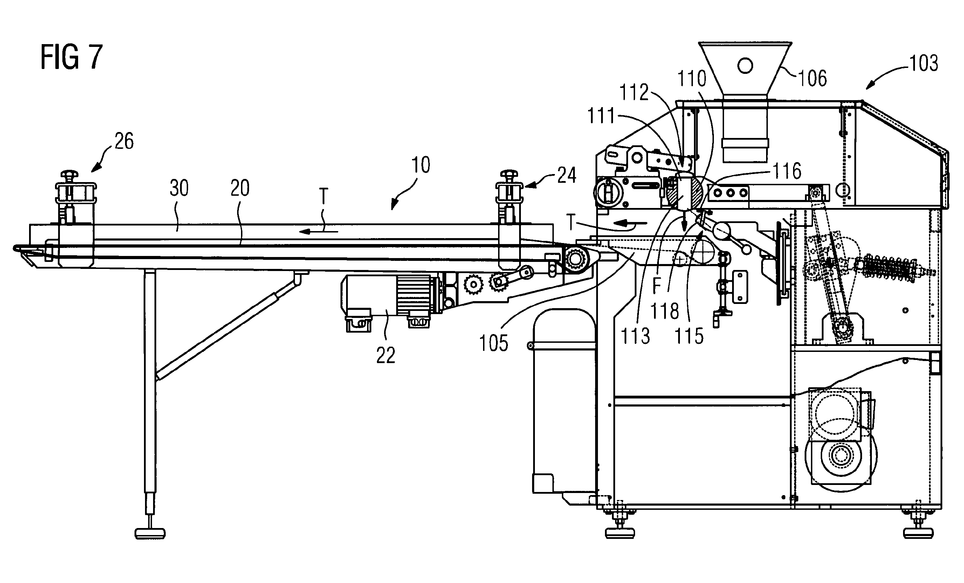

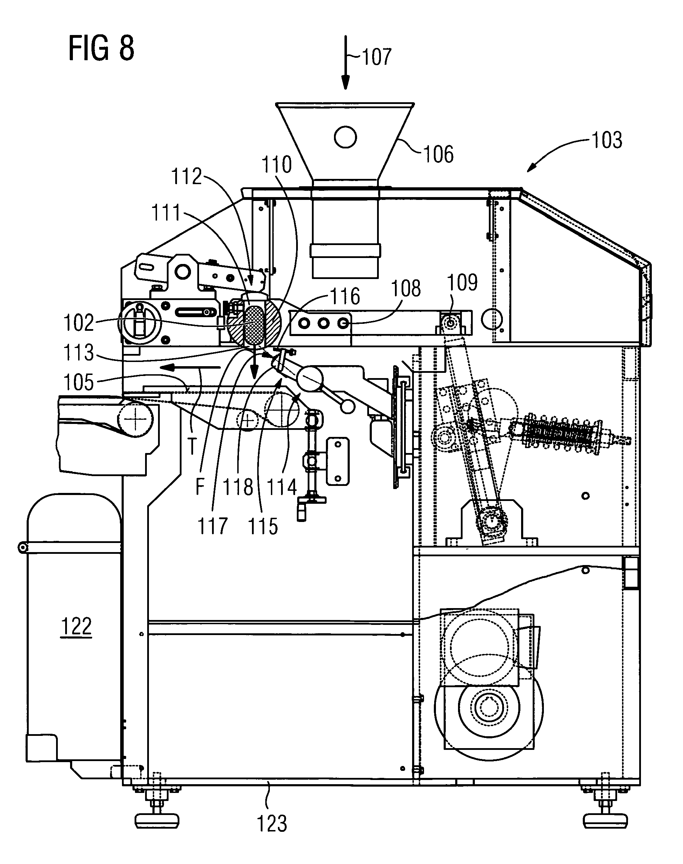

Die in der FIG 6 und 7 gezeigte Vorrichtung zum Bearbeiten von Teiglingen umfasst neben einer Wirkvorrichtung 10 gemäß der Erfindung auch eine Einrichtung 103 zum Portionieren eines Teiglings und eine Übergabeeinrichtung mit einem umlaufenden Übergabeband 105, mittels welchem von der Einrichtung 103 portionierte Teiglinge zur Wirkvorrichtung 10 weiter transportiert werden können. FIG 8 zeigt die Portioniereinrichtung 103 und das Übergabeband 105 in einer detaillierteren Ansicht.

Die Portioniereinrichtung 103 weist einen Teigmasseneinfülltrichter 106 auf zum Beschicken einer zusammenhängenden Teigmasse 107 beschickt werden kann. Unterhalb des Teigmasseneinfülltrichters 106 befindet sich ein Teigteilzylinder 108 mit einem Teigteilzylinderkolben 109, wobei der Teigteilzylinder 108 mit einer Teigteilwelle 110 insbesondere räumlich wirkverbunden sein kann.

Die Teigteilwelle 110 hat eine Teigteilkammer 111 und bildet mit dieser eine Ausgebeeinrichtung 112 der Portioniereinrichtung 103. Befindet sich die Teigteilkammer 111 in einer vertikalen Lage, kann mittels des Teigteilzylinderkolben 109 Teigmasse 107 in die Teigteilkammer 111 der Teigteilwelle 110 eingebracht werden. Durch Drehen der Teigteilwelle 110 um ihre Längsachse kann der Teigling 102 im Wesentlichen portioniert werden.

Ist die Teigteilwelle 110 derart gedreht, dass die Teigteilkammer 111 im Wesentlichen vertikal ausgerichtet ist, wobei auch eine Ausgebeöffnung 113 der Ausgebeeinrichtung 112 nach unten hin ausgerichtet ist, kann der in Teigteilkammer 111 befindliche portionierte Teigling 102 allein auf Grund der Schwerkraft oder im freien Fall aus der Teigteilkammer 111 heraus fallen in einer Fallbewegung F.

Um ein solches Herausfallen des portionierten Teiglings 102, insbesondere ein Lösen des portionierten Teiglings 102 von Wandungen der Teigteilkammer 111, zu unterstützen und gegebenenfalls zu beschleunigen, verfügt die Bearbeitungsvorrichtung über berührungslos arbeitende Mittel 114 zum Lösen des portionierten Teiglings 102 von einem Bauteil und/oder von einer Bauteilgruppe der Bearbeitungsvorrichtung, wobei speziell in diesem Ausführungsbeispiel berührungslos arbeitende Mittel 115 zum Herauslösen des portionierten Teiglings 102 aus der Ausgebeeinrichtung 112 unterhalb dieser Ausgebeeinrichtung 112 angeordnet sind. Insbesondere sind die berührungslos arbeitenden Mittel 115 zum Herauslösen hierbei unterhalb und neben der Ausgebeöffnung 113 der Ausgebeeinrichtung 112 platziert.

Vorteilhafter Weise kann mittels der berührungslos arbeitenden Mittel 115 zum Herauslösen ein Lösen des portionierten Teiglings 102 aus der Teigteilkammer 111 erleichtert und auch forciert werden, wodurch ein Transport des portionierten Teiglings 102 insgesamt zuverlässiger erfolgen kann.

Zum berührungslosen Herauslösen verfügen die berührungslos arbeitenden Mittel 115 über wenigstens eine Druckluftdüse 116. Insofern kann der portionierte Teigling 102 mittels Druckluftunterstützung berührungslos aus der Teigteilkammer 111 vorteilhaft herausgelöst werden.

Die Druckluftdüse 116 zeigt hierbei mit ihrer Düsenöffnung 117 auf die Ausgebeöffnung 113 der Ausgebeeinrichtung 112, so dass Druckluft in die Teigteilkammer 111 eingeblasen werden kann.

Neben der Druckluftdüse 116 verfügen die berührungslos arbeitenden Mittel 115 weiter noch über wenigstens eine Flüssigkeitsdüse 118, mittels welcher der portionierte Teigling 102, insbesondere vor einem Herauslösen aus der Teigteilkammer 111, vorzugsweise mit Öl benetzt werden kann, wodurch die Gefahr verringert wird, dass der herausgefallene Teigling 102 nach einem Aufprall auf das umlaufende Übergabeband 105 nachteilig fest an diesem umlaufenden Transportband 105 anhaften bleibt. Somit kann der Transport des portionierten Teiglings 102 weiter noch zuverlässiger gestaltet werden.

Sowohl die Druckluftdüse 116 als auch die Flüssigkeitsdüse 118 können beweglich an einer Halterung der berührungslos arbeitenden Mittel 115 zum Herauslösen befestigt sein, so dass die Druckluftdüse 116 und die Flüssigkeitsdüse 118 gut und individuell auf die Ausgebeöffnung 113 ausgerichtet werden können.

An der Halterung kann eine Einrichtung zum Benetzen des portionierten Teiglings und/oder einer Wandung der Ausgebeeinrichtung mit Öl befestigt sein, wobei diese Benetzungseinrichtung auch eine Komponente insbesondere berührungslos arbeitender Mittel 114 zum Lösen des portionierten Teiglings 102 von einem Bauteil und/oder von einer Bauteilgruppe sein können.

Damit stets ausreichend Druckluft zum Speisen der Druckluftdüse 116 zur Verfügung steht, ist noch ein Druckluftbehälter 122 vorgesehen, welcher an einem Gehäuse 123 der Bearbeitungsvorrichtung befestigt ist. Auch kann ein entsprechender Flüssigkeitsbehälter (hier nicht gezeigt) zum Bevorraten von Öl oder dergleichen vorgesehen sein.

Die auf das Übergabeband 105 gefallenen Teiglinge werden in der Transportrichtung vom Übergabeband 105 zum Transportband 20 der Wirkvorrichtung 10 transportiert und dort ohne eine Fallbewegung im Wesentlichen horizontal übergeben, gleiten also kontinuierlich ohne Fallen von dem einen Band 105 auf das andere Band 20. Dadurch ist eine Bearbeitung der Teiglinge realisiert, bei der außer der Fallbewegung aus der Portioniereinrichtung 103 auf die Übergabeeinrichtung 105 keine weitere Fallbewegung der Teiglinge vor dem Wirken in der Wirkvorrichtung 10 erfolgt, sondern lediglich eine im Wesentlichen horizontale Transportbewegung in der Transportrichtung T. Dies verbessert gerade bei empfindlichen, klebrigen Teigen wie beispielsweise Panettoneteigen die Verarbeitung und das Wirkergebnis.

### Bezugszeichenliste

- 10: Wirkvorrichtung
- 12: Gestell
- 14: horizontales Gestellteil
- 16: vertikales Gestellteil
- 18: Stützteil
- 20: Transportband
- 21: Transportbandfläche
- 22: Motor
- 24, 26: Führungsschienen
- 28: Halteelemente
- 29: Rändelmutter
- 30: Wirkkanal
- 31: Wirkkanalfläche
- 32, 34: Führungsstangen
- 36: Befestigungsabschnitte
- 38: obere Klemmbacke
- 40: untere Klemmbacke
- 42: Stellschraube
- 103: Teigportioniereinrichtung
- 105: Übergabeband
- 106: Teigmasseneinfülltrichter
- 110: Teigteilwelle
- 111: Teigteilkammer
- 113: Ausgebeöffnung
- 114: berührunglos arbeitende Mittel zum Lösen eines portionier- ten Teiglings
- 115: berührunglos arbeitende Mittel zum Lösen eines portionier- ten Teiglings
- 116: Druckluftdüse
- 118: Flüssigkeitsdüse
- 122: Druckluftbehälter
- 123: Gehäuse

- A: Abstand
- F: Fallbewegung
- K: Kanalrichtung
- T: Transportrichtung
- α: Neigungswinkel

## Patentansprüche

1. Wirkvorrichtung zum Wirken von Teiglingen, umfassend
a) ein mittels eines Transportantriebes (22) bewegbares oder bewegtes Transportband (20) zum Fördern der Teiglinge in wenigstens einer Transportrichtung (T), wobei das Transportband eine Transportbandfläche (21), auf oder an der die zu wirkenden Teiglinge zu liegen kommen oder getragen werden, aufweist und
b) zumindest einen relativ zum Transportband in Ruhe bleibenden oder unbewegten Wirkkanal (30) mit einer Wirkkanalfläche (31), die sich in wenigstens einer Kanalrichtung (K) erstreckt, von der Transportbandfläche (21) beabstandet ist und wenigstens teilweise der Transportbandfläche zugewandt ist,
c) wobei die Transportrichtung (T) des Transportbandes und die Kanalrichtung (K) der Wirkkanalfläche zumindest abschnittsweise unter wenigstens einem Neigungswinkel schräg zueinander verlaufen, so dass ein auf dem Transportband geförderter Teigling zwischen der Transportbandfläche und der Wirkkanalfläche gewirkt wird.

2. Wirkvorrichtung nach Anspruch 1, bei der der wenigstens eine Neigungswinkel (α) zwischen der Transportrichtung (T) und der Kanalrichtung (K) auf wenigstens zwei verschiedene Werte einstellbar ist.

3. Wirkvorrichtung nach einem der vorhergehenden Ansprüche, bei der ein Neigungswinkel (α) zwischen der Transportrichtung (T) und der Kanalrichtung (K) in einer sich im Wesentlichen parallel zur Transportbandfläche erstreckenden Ebene eingestellt oder einstellbar ist.

4. Wirkvorrichtung nach einem der vorhergehenden Ansprüche, bei der ein Neigungswinkel zwischen der Transportrichtung (T) und der Kanalrichtung (K) in einer sich im Wesentlichen senkrecht zur Transportbandfläche erstreckenden Ebene eingestellt oder einstellbar ist.

5. Wirkvorrichtung nach einem der vorhergehenden Ansprüche, bei der der Neigungswinkel in einem Bereich zwischen 1° und 35°, vorzugsweise zwischen 2° und 25°, liegt.

6. Wirkvorrichtung nach einem der vorhergehenden Ansprüche, bei der die Wirkkanalfläche (21) wenigstens eines Wirkkanals (20) in einem senkrecht zur Kanalrichtung (K) gebildeten Querschnitt wenigstens teilweise konkav gekrümmt ausgebildet ist, und/oder bei der die Wirkkanalfläche (21) in dem senkrecht zur Kanalrichtung (K) gebildeten Querschnitt im Wesentlichen kreisförmig, insbesondere in Gestalt eines Viertelkreises, ausgebildet ist und/oder, bei der sich der senkrecht zur Kanalrichtung (K) gebildete Querschnitt der Wirkkanalfläche (21) wenigstens eines Wirkkanals (20) in der Kanalrichtung (K) wenigstens teilweise verändert, insbesondere in Richtung der Transportrichtung (T) verjüngt.

7. Wirkvorrichtung nach einem der vorhergehenden Ansprüche, bei der der zumindest eine Wirkkanal um eine in Kanalrichtung (K) verlaufende oder um eine zur Kanalrichtung (K) parallele Schwenkachse verschwenkbar und in wenigstens zwei verschiedenen Schwenkstellungen fixierbar ist.

8. Wirkvorrichtung nach einem der vorhergehenden Ansprüche, bei der der Abstand zwischen der Wirkkanalfläche (31) und der Transportbandfläche (21) variierbar oder auf wenigstens zwei verschiedene Werte einstellbar ist.

9. Wirkvorrichtung nach einem der vorhergehenden Ansprüche, bei der oberhalb des Transportbandes zumindest zwei sich quer zur Transportrichtung erstreckende Führungsschienen vorgesehen sind, an denen der zumindest eine Wirkkanal über Halteelemente gehalten ist, wobei die Halteelemente entlang der Führungsschienen bewegbar und in verschiedenen Positionen fixierbar angeordnet sind und/oder die Halteelemente mit einer Höhenverstelleinrichtung zum Einstellen des Abstandes zwischen dem zumindest einen Wirkkanal und dem Transportband versehen sind und/oder die Halteelemente mit einem Schwenkmechanismus zum Verschwenken des zumindest einen Wirkkanals um seine axial zur Kanalrichtung oder eine sich parallel zur Kanalrichtung erstreckende Schwenkachse versehen sind.

10. Wirkvorrichtung nach einem der vorhergehenden Ansprüche, bei der der zumindest eine Wirkkanal im Bereich seiner Wirkkanalfläche aus einem Kunststoff, insbesondere einem die Anhaftung der Teiglinge verringernden Kunststoff, besteht, beispielsweise einem Kunststoff auf Basis von PTFE oder POM, und/oder bei der der zumindest eine Wirkkanal aus Metall, insbesondere Aluminium, hergestellt ist und im Bereich seiner Wirkkanalfläche mit dem Kunststoff beschichtet ist und/oder, bei der die Wirkkanalfläche (21) wenigstens eines Wirkkanals (20) mit Noppen versehen ist oder eine Aufrauung aufweist.

11. Wirkvorrichtung nach einem der vorhergehenden Ansprüche, bei der demselben Transportband mehrere Wirkkanäle zugeordnet sind, wobei vorzugsweise die Wirkkanäle oder zumindest ihre jeweiligen Wirkflächen in Richtung parallel zur Transportbandfläche oder senkrecht zur Transportrichtung im Wesentlichen in gleichbleibenden Abständen zueinander verlaufen.

12. Wirkvorrichtung nach einem der vorhergehenden Ansprüche, bei der der zumindest eine Wirkkanal profilschienenartig ausgebildet ist.

13. Wirkvorrichtung nach einem der vorhergehenden Ansprüche, bei der der zumindest eine Wirkkanal oberhalb des Transportbandes angeordnet ist.

14. Wirkvorrichtung nach einem der vorhergehenden Ansprüche, bei der der Transport der Teiglinge in der Transportrichtung von einer Portioniereinrichtung zum Portionieren der Teiglinge zu dem wenigstens einen Wirkkanal im Wesentlichen horizontal und/oder ohne eine Fallbewegung erfolgt.

15. Wirkvorrichtung nach einem der vorhergehenden Ansprüche, bei der dem Transportband (20) eine Übergabeeinrichtung, insbesondere ein Übergabeband (105), vorgeschaltet ist, die die von einer Portioniereinrichtung kommenden Teiglinge im Wesentlichen horizontal und/oder ohne eine Fallbewegung an das Transportband (20) übergibt.
